# EUROPEAN PATENT APPLICATION

(11) **EP 3 726 484 A1**
(43) Date of publication of application: **21.10.2020**
(21) Application number: 18889268.1
(22) Date of filing: 06.12.2018
(51) Int. Cl.: G07C 9/00, B60R 25/24, H04L 29/06

(54) **METHOD FOR MANAGING VEHICLE CONTROL PERMISSIONS, AND APPARATUS**

(30) Priority: 15.12.2017 CN 201711345293; 24.05.2018 CN 201810506505
(71) Applicant: Nio Nextev Limited, Hong Kong (CN)
(72) Inventor: LIU, Yong, Hong Kong (CN); LUO, Xi, Hong Kong (CN); ZHU, Hao, Hong Kong (CN); ZHAO, Hanqing, Hong Kong (CN); WENG, Yujian, Hong Kong (CN)
(74) Representative: Barker Brettell LLP
(86) International application number: PCT/CN2018/119514
(87) International publication number: WO 2019/114600

(57) **Abstract**

The invention relates to automotive electronic technologies, and in particular to a method and system for managing vehicle control permissions, a vehicle control system, and a computer storage medium for implementing the method. The method according to the invention comprises the steps of: assigning at least one of a plurality of vehicle control permissions to each of a plurality of roles, and assigning at least one of the plurality of roles to each of a plurality of users to enable the user to have a corresponding vehicle control permission; and providing, by means of a vehicle control apparatus, a requesting party with a vehicle control permission of a user corresponding to an authorization request in response to the authorization request.

## Description

### Technical Field

The invention relates to automotive electronic technologies, and in particular to a method and system for managing vehicle control permissions, a vehicle control system, and a computer storage medium for implementing the method.

### Background Art

In a case in which the same vehicle is used by a plurality of users, different vehicle control permissions need to be assigned to different users. For example, for a user with relatively less driving experience, a sport mode may be a driving mode which is not permitted; for another example, in a maintaining process for the vehicle, maintenance workers may need to move the vehicle, and in this case it is necessary to limit a driving range of the workers. But there is no technology for customizing vehicle control permissions in the market at present, and each user obtains the same vehicle control permission after unlocking and getting on the vehicle. With the development of automotive technologies, vehicles are given more and more functions, which further increases difficulties in management and assignment of vehicle control permissions.

Therefore, there is an urgent need for a method for managing vehicle control permissions, and an apparatus to realize efficient management of vehicle control permissions.

### Summary of the Invention

An object of the invention is to provide a method and system for managing vehicle control permissions, which have advantages such as efficiency and flexibility.

According to one aspect of the invention, a method for managing vehicle control permissions comprises the steps of:
assigning at least one of a plurality of vehicle control permissions to each of a plurality of roles, and assigning at least one of the plurality of roles to each of a plurality of users to enable the user to have a corresponding vehicle control permission; and
providing, by means of a vehicle control apparatus, a requesting party with a vehicle control permission of a user corresponding to an authorization request in response to the authorization request.

Preferably, in the method described above, the vehicle control permissions comprise a vehicle operating permission, a centre console screen setting permission, a personal centre setting permission, a system setting permission, an in-vehicle application permission and a remote control permission.

Preferably, in the method described above, the roles are set based on business application scenarios.

Preferably, in the method described above, the vehicle control permissions are provided in the following manner:
receiving, from the vehicle control apparatus, a request for acquiring user data, the request containing an identity identifier of the user;
determining a role of the user associated with the identity identifier; and
returning the user data to the vehicle control apparatus, the user data containing vehicle control permissions of the user associated with the identity identifier.

According to one aspect of the invention, a method for managing vehicle control permissions comprises the steps of:
sending, to a cloud, a request for acquiring user data, the authorization request containing an identity identifier of the user; and
providing vehicle control permissions to a requesting party according to the user data returned by the cloud, wherein the user data contains vehicle control permissions of the user associated with the identity identifier,
wherein at least one of a plurality of vehicle control permissions is assigned to each of a plurality of roles, and at least one of the plurality of roles is assigned to each of a plurality of users to enable the user to have a corresponding vehicle control permission.

Preferably, in the method described above, the request for acquiring the user data is sent in the following manner:
receiving a request for unlocking the vehicle from a vehicle key, the request containing an identity identifier of the requesting party; and
extracting the identity identifier from the request for unlocking the vehicle and sending, to the cloud, the request for acquiring the user data that contains the identity identifier.

Preferably, in the method described above, the request for acquiring the user data is sent in the following manner:
receiving a request for unlocking the vehicle from a user terminal, the request containing an identity identifier of the requesting party that is obtained by the user terminal from the cloud; and
extracting the identity identifier from the request for unlocking the vehicle and sending, to the cloud, the request for acquiring the user data that contains the identity identifier.

Preferably, in the method described above, the request for acquiring the user data is sent in the following manner:
receiving, from the cloud, a request for unlocking the vehicle that is forwarded by a user terminal via the cloud, the request containing an identity identifier of the requesting party that is provided by the cloud; and
extracting the identity identifier from the request for unlocking the vehicle and sending, to the cloud, the request for acquiring the user data that contains the identity identifier.

Preferably, in the method described above, the request for acquiring the user data is sent in the following manner:
receiving a request for unlocking the vehicle from the cloud, the request containing an identity identifier of the requesting party that is provided by the cloud, wherein in response to an event that a user terminal scans a QR code and a login operation is performed on the user terminal, the cloud sends the request for unlocking the vehicle, the QR code being presented on a display screen of a vehicle control apparatus; and
extracting the identity identifier from the request for unlocking the vehicle and sending, to the cloud, the request for acquiring the user data that contains the identity identifier.

According to another aspect of the invention, a system for managing vehicle control permissions comprises a memory, a processor and a computer program stored on the memory and operable on the processor, and the system executes the program to implement the method described above.

According to another aspect of the invention, a vehicle control system comprises a memory, a processor and a computer program stored on the memory and operable on the processor, and the vehicle control system executes the program to implement the method described above.

According to a further aspect of the invention, a computer readable storage medium having a computer program stored thereon is provided, wherein the program implements, when executed by a processor, the method described above.

### Brief Description of the Drawings

The foregoing and/or other aspects and advantages of the invention will be clearer and more comprehensible from the following description of various aspects in combination with the drawings, and the same or similar units in the drawings are represented by the same numerals. The drawings comprise:
FIG. 1 is a schematic diagram of a "user-role-permission" association model.
FIG. 2 is a flowchart of a method for managing vehicle control permissions according to one embodiment of the invention.
FIG. 3 is a schematic block diagram of a system for managing vehicle control permissions according to a further embodiment of the invention.
FIG. 4 is a flowchart of a method for managing vehicle control permissions according to another embodiment of the invention.
FIG. 5 is a flowchart of a method for managing vehicle control permissions according to another embodiment of the invention.
FIG. 6 is a flowchart of a method for managing vehicle control permissions according to another embodiment of the invention.
FIG. 7 is a flowchart of a method for managing vehicle control permissions according to another embodiment of the invention.
FIG. 8 is a schematic block diagram of a vehicle control system according to a further embodiment of the invention.

### Detailed Description of Embodiments

The invention is described below more comprehensively with reference to the drawings showing schematic embodiments of the invention. However, the invention can be implemented in different forms and should not be construed as being only limited to the embodiments herein. The embodiments provided above are only intended to make the disclosure of this specification comprehensive and complete, so as to convey the protection scope of the invention to those skilled in the art more comprehensively.

In this specification, the terms such as "contain" and "comprise" indicate that in addition to the units and steps that are directly and clearly described in the specification and claims, other units and steps that are not directly or clearly described are not excluded in the technical solutions of the invention.

The terms such as "first" and "second" are not used to indicate sequences of units in terms of time, space, size, and the like, and are only used to distinguish between the units.

"Couple" should be construed as comprising a case in which electrical energy or electrical signals are directly transmitted between two units or a case in which electrical energy or electrical signals are indirectly transmitted via one or more third units.

In various examples of this application, the term "head unit", is exemplarily an information entertainment system of a vehicle, may refer to a controller of the system in some cases, and may particularly refer to an display screen (if any) of the system in some cases, which can be determined in combination with the context. It should be particularly pointed out that, the information entertainment system according to this application comprises various functions such as audio and video playing, navigation, weather and mileage hinting, or combinations thereof, and can also be called an operating system of the vehicle in some cases.

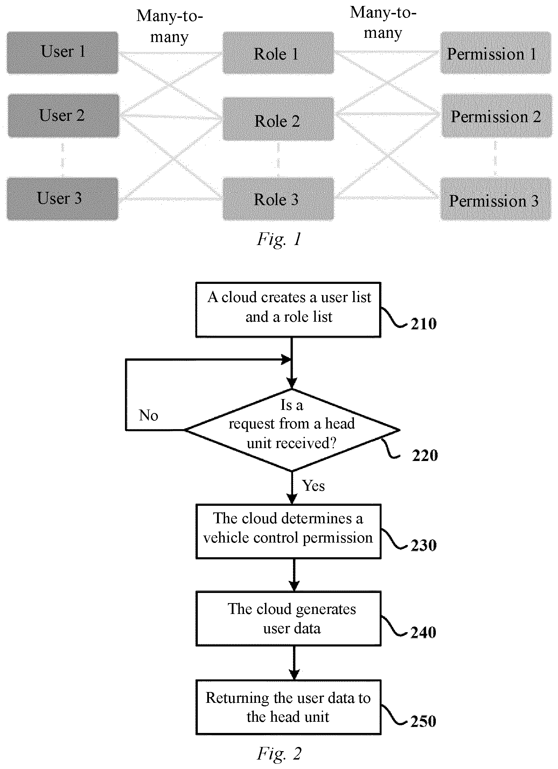

According to one aspect of the invention, by constructing a "user-role-permission" association model, the user is associated with the vehicle control permission through the role, thereby improving management and control efficiency of the vehicle control permissions. FIG. 1 is a schematic diagram of a "user-role-permission" association model. As shown in FIG. 1, each of the users from user 1 to user n may be assigned with one or more of the roles from role 1 to role n, and each role may be given one or more of the vehicle control permissions from vehicle control permission 1 to vehicle control permission n. Thus, different vehicle control permissions can be assigned to different users. It should be pointed out that, in the examples given here, the number of users, the number of roles and the number of vehicle control permissions are identical, but they may also be different from each other or partially identical.

In one embodiment of the invention, the vehicle control permissions may comprise the following types: a vehicle operating permission, a centre console screen setting permission, a personal centre setting permission, a system setting permission, an in-vehicle application permission, a remote control permission, and the like. The vehicle operating permission, for example, may comprise operating permissions on a vehicle door, a trunk, a vehicle driving system, and the like. The centre console screen setting permission refers to a permission to operate vehicle components through a human-machine interface on a centre console screen, the vehicle components, for example, comprising vehicle lamps, windscreen wipers, reflectors, rear view mirrors, an air conditioner, seat heaters, and the like. The personal centre setting permission, for example, comprises permissions to set vehicle authorization, a guest mode, account switching, and the like. The system setting permission, for example, comprises permissions to set general functions, such as network, language, time and system upgrading. The in-vehicle application permission, for example, comprises permissions to use a navigation system, a phone, a music player, and the like. The remote control permission, for example, comprises control permissions to remotely open and close the vehicle door, remotely open and close the trunk, and the like.

In another embodiment of the invention, one or more of the vehicle control permissions can be assigned to one role, that is, an association relationship can be established between one role and one set (subset or complete set) of the vehicle control permissions. Preferably, corresponding roles can be created for various business application scenarios, and instances of the roles include, but are not limited to, self driving, renting a car, test driving, valet maintenance, battery charging and swap, valet parking, and the like. Furthermore, in some examples, the roles are equivalent to services, and authorization for the roles is equivalent to authorization for the services. For example, assigning vehicle control permissions to role 1 is equivalent to assigning control permissions to a service corresponding to role 1. If role 1 is battery charging and swap, this is equivalent to assigning corresponding permissions to the service of battery charging and swap, and the permissions may comprise permissions to open the vehicle door, drive the vehicle, operate a battery, and the like. It should be understood that the control permissions of the service role 1 are going to be further implemented on a user, for example, a service person helping the owner of the vehicle (i.e., the vehicle owner) to perform battery charging and swap.

FIG. 2 is a flowchart of a method for managing vehicle control permissions according to one embodiment of the invention.

As shown in FIG. 2, in step 210, a user list U and a role list R are first created at a cloud. The role list R contains a plurality of roles, wherein each role is assigned with one or more vehicle control permissions. The user list U contains identity identifiers of a plurality of users and an association relationship between each user and a role (i.e., the role with which each user is allowed to associate). Preferably, the association relationship between each user and the role can have a time attribute, the attribute defines whether the association relationship between the user and the role is permanent or temporary, and if the association relationship is temporary, start and end times of the association relationship are set. Preferably, the user list U may further store other information of each user, such as the name, contact information, address, driving preference, hobbies and interests. It should be noted that, in some examples, at least one user in the user list U is the vehicle owner, the vehicle owner has the most extensive control permissions, and therefore, according to this example, the vehicle owner is assigned with all the roles and all the permissions. In some other examples, the vehicle owner may be independent of the user list U, and is assigned with the most extensive control permissions. In this step, a user can also modify, via the cloud, the user list U and the role list created already. As an example, the user may modify the user list and/or the role list through human-machine interaction of a head unit, and the head unit uploads the modified user list and/or role list to the cloud so as to update corresponding information at the cloud. As an example, the user may also modify the user list and/or the role list through a human-machine interaction interface of a user terminal (such as a mobile phone), and the user terminal uploads the modified user list and/or the role list to the cloud so as to update corresponding information at the cloud. It should be understood that, generally, the vehicle owner has permissions to modify the user list and/or the role list, or the vehicle owner has permissions to modify and update modifiable data, such as related identity data in the cloud in this application, but other users may not have such permissions. This can be determined according to practical application.

In all the examples of the invention, operations of the user at the head unit can be performed through the human-machine interaction interface of the head unit. Operations of the user on the user terminal can be performed through the human-machine interaction interface of the user terminal. These human-machine interaction interfaces can be implemented as applications (APP).

Then, the process proceeds to step 220, the cloud determines whether a request for acquiring user data is received from a vehicle control apparatus (such as the head unit but not limited thereto, other control components in the vehicle are also usable according to practical application). The request contains at least an identity identifier of the user and an identifier of the vehicle so as to enable the cloud to search the user list U of the vehicle for the corresponding user data. If it is determined that the request for acquiring the user data is received, the process proceeds to step 230, and otherwise, the process continues to wait.

In step 230, the cloud searches the user list U for the user corresponding to the identity identifier in the request and a role of the user, and determines vehicle control permissions associated with the user according to the role.

Then, the process proceeds to step 240, the cloud generates the user data based on information obtained through searching in step 230, the user data at least containing the vehicle control permissions of the user associated with the identity identifier, so that the vehicle control apparatus provides the corresponding vehicle control permissions to the user.

Then, in step 250, the cloud returns the user data to the vehicle control apparatus.

Here, how to assign, to a user of a request, control permissions matching a role corresponding to the user is described in combination with the example provided in FIG. 2. In combination with the above description about the role and the service, it can be seen that, from a certain perspective, the example of FIG. 2 is assigning, according to a service type, control permissions to a user corresponding to a role of the service type.

In a case in which the vehicle owner is not in the user list, the example of FIG. 2 has no description of how to assign permissions to the vehicle owner. Briefly, if the cloud determines that the request received from the vehicle control apparatus (such as the head unit) comes from the vehicle owner (the user request comprises identity recognition data, and whereby the cloud determines whether the user is the vehicle owner), the cloud grants all the permissions to the vehicle owner. In a case in which the user list comprises the vehicle owner, in the example of FIG. 2, when it is determined that the request received from the vehicle control apparatus (such as the head unit) comes from the vehicle owner, permissions corresponding to all the roles can be assigned to the vehicle owner.

The method according to the invention further comprises that the user as the vehicle owner can assign at least one of the plurality of vehicle control permissions to other users or roles.

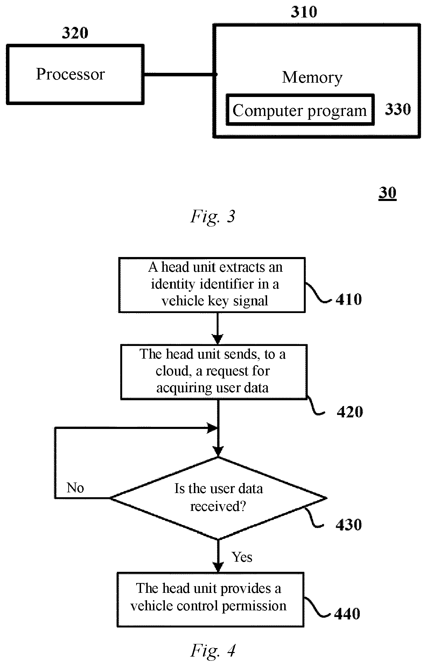

Here, the vehicle owner may directly assign control permissions to other users, for example, the vehicle owner sets information through the interaction interface of the head unit of the vehicle or a user terminal of the vehicle owner, wherein the information shows which control permissions are going to be assigned to the other users, and the set information is sent to the cloud. Thus, the other users can be authorized through any one of the following examples in combination with FIGs. 4 to 8. It should be noted that, when the vehicle owner assigns the permissions to the other users for the first time, identity information of the users will be sent to the cloud together with the set information.

Alternatively, the vehicle owner may also assign different control permissions to roles, an assignment process is similar to assigning the control permissions to the others, and the difference lies in that, if the vehicle owner assigns the permissions to the other users in this example, the vehicle owner can directly assign the roles to the users. Back to the role and the service type mentioned above, here, the vehicle owner authorizes someone else to use the vehicle according to a role, which can also can be considered that the vehicle owner authorizes someone else to use the vehicle according to a service type, for example, identity information of user 1 is input by the vehicle owner with the head unit of the vehicle or by the user, the user 1 is set to be role 1 at the same time, and after the information is transmitted to the cloud, it is considered that a role of user 1 is role 1 and corresponds to permissions of role 1. A process of user 1 being authorized can be any one of the following examples in combination with FIGs. 4 to 8.

FIG. 3 is a schematic block diagram of a system for managing vehicle control permissions according to a further embodiment of the invention.

The system 30 shown in FIG. 3 comprises a memory 310, a processor 320 and a computer program 330 stored on the memory 310 and operable on the processor 320, wherein the above method for managing vehicle control permissions described with FIG. 2 can be implemented by executing the computer program 330.

FIG. 4 is a flowchart of a method for managing vehicle control permissions according to another embodiment of the invention.

As shown in FIG. 4, in step 410, when receiving a request for unlocking a vehicle that is sent by a vehicle key through wireless signals, a head unit extracts identity information contained in the request. In this embodiment, a vehicle key number can be bound with a specified user in advance, so that after the vehicle is unlocked with a vehicle key, the head unit can recognize a corresponding user according to a vehicle key number.

Then, the process proceeds to step 420, the head unit sends, to a cloud, a request for acquiring user data that contains the identity identifier.

Then, the process proceeds to step 430, the head unit determines whether the user data is received from the cloud. Exemplarily, in this embodiment, the cloud can generate the user data according to the above method in the embodiment described with FIG. 2, and return the user data to the head unit. If it is determined that the user data is received, the process proceeds to step 440, and otherwise, the process continues to wait.

In step 440, the head unit provides corresponding vehicle control permissions for a requesting party or the user indicated in the request for unlocking the vehicle.

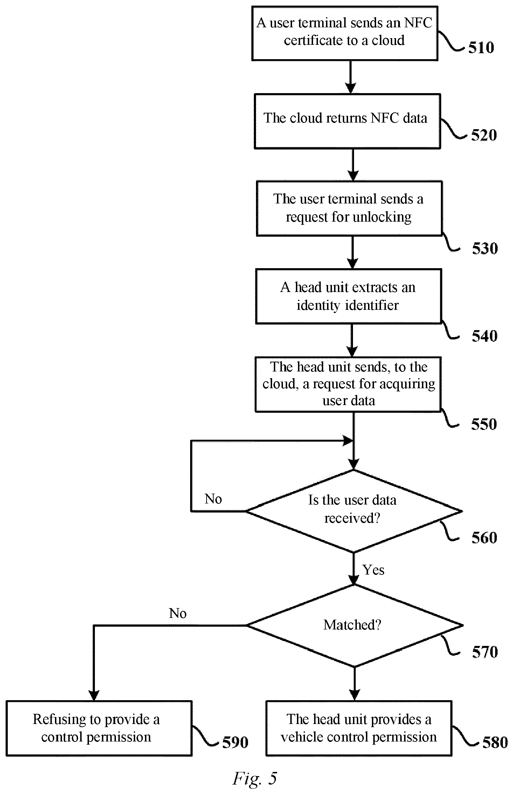

FIG. 5 is a flowchart of a method for managing vehicle control permissions according to another embodiment of the invention.

As shown in FIG. 5, in step 510, a user terminal (such as a mobile phone, a tablet computer and a smart watch) sends, to a cloud, a request for generating near field communication (NFC) certificate data. Then, in step 520, after receiving the request for generating the NFC certificate data, the cloud inquires information about control permissions of the user, and then returns a message containing an NFC certificate, the control permissions of the user and identity information of the user to the user terminal. Then, the process proceeds to step 530, the user terminal sends, to a head unit through NFC, a request for unlocking the vehicle that contains the NFC certificate, the control permissions, the identity information of the user, and the like.

In step 540, when receiving the request for unlocking the vehicle from the user terminal (such as a mobile phone, a tablet commuter and a smart watch), the head unit extracts an identity identifier contained in the request.

Then, the process proceeds to step 550, the head unit sends, to the cloud, a request for acquiring user data that contains the identity identifier.

Then, the process proceeds to step 560, the head unit determines whether the user data is received from the cloud. Exemplarily, in this embodiment, the cloud can generate the user data according to the above method in the embodiment described with FIG. 2, and return the user data to the head unit. If it is determined that the user data is received, the process proceeds to step 570, and otherwise, the process continues to wait.

In step 570, the head unit compares, with the user data returned by the cloud in step 560, the information (such as the NFC certificate and the control permissions of the user) sent by the user terminal and contained in the request for unlocking the vehicle, if the information matches the user data, the process proceeds to step 580, and corresponding vehicle control permissions are provided for a requesting party or the user indicated in the request for unlocking the vehicle; otherwise, the process proceeds to step 590, and provision of the control permissions is refused.

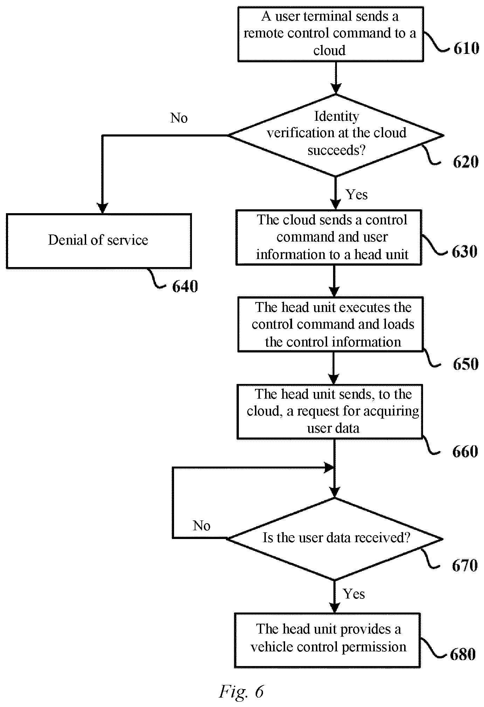

FIG. 6 is a flowchart of a method for managing vehicle control permissions according to another embodiment of the invention.

As shown in FIG. 6, in step 610, a user terminal sends, to a cloud, a remote control command for unlocking a vehicle. Then, in step 620, the cloud verifies an identity of the user terminal, if the verification succeeds, the process proceeds to step 630, and otherwise, the process proceeds to step 640.

In step 630, the cloud sends a control command and user information to a head unit.

After step 630, the process proceeds to step 650. In this step, the head unit executes the control command and loads the user information.

Then, the process proceeds to step 660, the head unit sends, to the cloud, a request for acquiring user data that contains an identity identifier.

Then, the process proceeds to step 670, the head unit determines whether the user data is received from the cloud. Exemplarily, in this embodiment, the cloud can generate the user data according to the above method in the embodiment described with FIG. 2, and return the user data to the head unit. If it is determined that the user data is received, the process proceeds to step 680, and otherwise, the process continues to wait.

In step 680, the head unit provides corresponding vehicle control permissions for a requesting party or the user indicated in the request for unlocking the vehicle.

The process returns back to another branch step 640 of step 620. In this step, the cloud returns a message of denial of service to the user terminal.

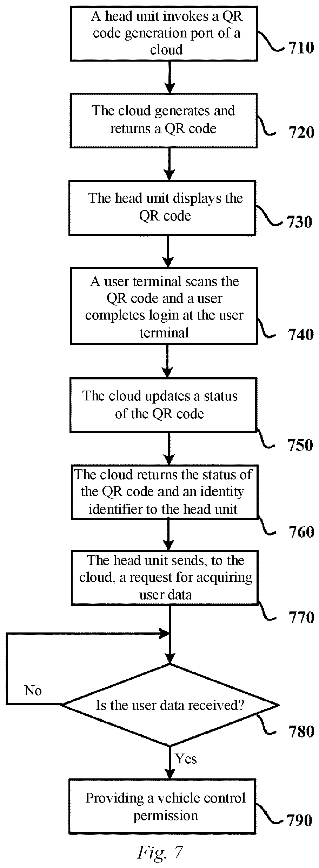

FIG. 7 is a flowchart of a method for managing vehicle control permissions according to another embodiment of the invention.

As shown in FIG. 7, in step 710, when receiving a request for user switching (for example, a user clicks a menu option of account switching on a human-machine interface of a head unit), the head unit will invoke a QR code generation interface of a cloud.

Then, in step 720, the cloud generates a QR code and returns QR code data to the head unit, the QR code data containing a corresponding identifier.

Then, the process proceeds to step 730, the head unit displays the QR code on the human-machine interface for the user terminal to scan.

Then, in step 740, after scanning the QR code and completes a login operation, the user terminal sends, to the cloud, information (such as a QR code identifier) contained in the QR code and an identity identifier associated with the user terminal.

Subsequently, the process proceeds to step 750, the cloud updates a status of the QR code corresponding to the QR code identifier to indicate that a new user has completed login.

Then, the process proceeds to step 760, when receiving a QR code status inquiry request from the head unit, the cloud returns, to the head unit, the status of the QR code corresponding to the identifier and the identity identifier associated with the user terminal.

Then, the process proceeds to step 770, the head unit sends, to the cloud, a request for acquiring user data that contains the identity identifier.

Then, the process proceeds to step 780, the head unit determines whether the user data is received from the cloud. Exemplarily, in this embodiment, the cloud can generate the user data according to the above method in the embodiment described with FIG. 2, and return the user data to the head unit. If it is determined that the user data is received, the process proceeds to step 790, and otherwise, the process continues to wait.

In step 790, the head unit provides corresponding vehicle control permissions to a requesting party or the user indicated in the request for unlocking the vehicle.

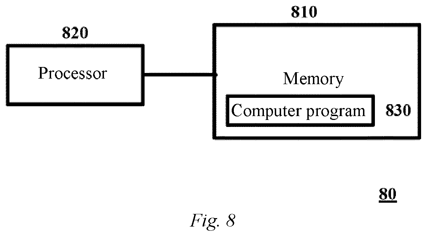

FIG. 8 is a schematic block diagram of a vehicle control system according to a further embodiment of the invention.

The system 80 shown in FIG. 8 comprises a memory 810, a processor 820 and a computer program 830 stored on the memory 810 and operable on the processor 820, wherein the above method for managing vehicle control permissions described with FIGs. 4 to 7 can be implemented by executing the computer program 830.

According to another aspect of the invention, a computer readable storage medium having a computer program stored thereon is also provided, and the program can implement, when executed by a processor, the above method for managing vehicle control permissions described with FIG. 2.

According to another aspect of the invention, a computer readable storage medium having a computer program stored thereon is also provided, and the program can implement, when executed by a processor, the above method for managing vehicle control permissions described with FIGs. 4 to 7.

The invention also provides an application or an application program applied to an electronic device, the application provides an interaction interface for a user, so that through the interaction interface, the user sends, to a cloud, a request for acquiring user data and receive the user data sent by the cloud. The electronic device, for example, is a head unit of a vehicle. The electronic device, for example, is also a user terminal of the user. In various examples above, the interaction interface for enabling the user to perform interaction with the cloud at the head unit and/or the user terminal are all examples of this application.

The embodiments and examples proposed herein are provided to describe as adequately as possible embodiments according to the technology and specific applications thereof and enable those skilled in the art to implement and use the invention. However, those skilled in the art will know that the above description and examples are provided only for description and illustration. The proposed description is not intended to cover all aspects of the invention or limit the invention to the disclosed precise forms.

In view of the description above, the scope of the present disclosure is defined by the following claims.

## Claims

1. A method for managing vehicle control permissions, **characterized by** comprising the steps of:
assigning, by a vehicle owner, at least one of a plurality of vehicle control permissions to other users or roles.

2. The method of claim 1, **characterized in that** the vehicle owner sets information through an interaction interface of a head unit of the vehicle or a user terminal of the vehicle owner, wherein the information shows that at least one of the plurality of vehicle control permissions is assigned to other users or roles; and the set information is sent to a cloud.

3. The method of claim 2, **characterized in that** in a case in which the other users are assigned with permissions for the first time, the vehicle owner transmits, to the cloud, identity information of the other users as part of the set information.

4. The method of claim 3, **characterized in that** in response to a request for control permissions, the cloud verifies identity information of the requesting party, and returns data to show which permissions are going to be assigned to the requesting party.

5. A method for managing vehicle control permissions, **characterized by** comprising the steps of:
assigning at least one of a plurality of vehicle control permissions to each of a plurality of roles, and assigning at least one of the plurality of roles to each of a plurality of users to enable the user to have a corresponding vehicle control permission; and
providing, by means of a vehicle control apparatus, a requesting party with a vehicle control permission of a user corresponding to an authorization request in response to the authorization request.

6. The method of claim 4, wherein the vehicle control permissions comprise a vehicle operating permission, a centre console screen setting permission, a personal centre setting permission, a system setting permission, an in-vehicle application permission and a remote control permission.

7. The method of claim 4, wherein the roles are set based on business application scenarios.

8. The method of claim 4, wherein the vehicle control permissions are provided in the following manner:
receiving, from the vehicle control apparatus, a request for acquiring user data, the request containing an identity identifier of the user;
determining a role of the user associated with the identity identifier; and
returning the user data to the vehicle control apparatus, the user data containing vehicle control permissions of the user associated with the identity identifier.

9. A system for managing vehicle control permissions, comprising a memory, a processor and a computer program stored on the memory and operable on the processor, **characterized in that** the program is executed to implement the method of any one of claims 5 to 8.

10. A computer readable storage medium having a computer program stored thereon, **characterized in that** the program implements, when executed by a processor, the method of any one of claims 5 to 8.

11. A method for managing vehicle control permissions, **characterized by** comprising the steps of:
sending, to a cloud, a request for acquiring user data, the request containing an identity identifier of the user; and
providing vehicle control permissions to a requesting party according to the user data returned by the cloud, wherein the user data contains vehicle control permissions of the user associated with the identity identifier,
wherein at least one of a plurality of vehicle control permissions is assigned to each of a plurality of roles, and at least one of the plurality of roles is assigned to each of a plurality of users to enable the user to have a corresponding vehicle control permission.

12. The method of claim 11, wherein the vehicle control permissions comprise a vehicle operating permission, a centre console screen setting permission, a personal centre setting permission, a system setting permission, an in-vehicle application permission and a remote control permission.

13. The method of claim 11, wherein the roles are set based on business application scenarios.

14. The method of claim 11, wherein the request for acquiring the user data is sent in the following manner:
receiving a request for unlocking the vehicle from a vehicle key, the request containing an identity identifier of the requesting party; and
extracting the identity identifier from the request for unlocking the vehicle and sending, to the cloud, the request for acquiring the user data that contains the identity identifier.

15. The method of claim 11, wherein the request for acquiring the user data is sent in the following manner:
receiving a request for unlocking the vehicle from a user terminal, the request containing an identity identifier of the requesting party that is obtained by the user terminal from the cloud; and
extracting the identity identifier from the request for unlocking the vehicle and sending, to the cloud, the request for acquiring the user data that contains the identity identifier.

16. The method of claim 11, wherein the request for acquiring the user data is sent in the following manner:
receiving, from the cloud, a request for unlocking the vehicle that is forwarded by a user terminal via the cloud, the request containing an identity identifier of the requesting party that is provided by the cloud; and
extracting the identity identifier from the request for unlocking the vehicle and sending, to the cloud, the request for acquiring the user data that contains the identity identifier.

17. The method of claim 11, wherein the request for acquiring the user data is sent in the following manner:
receiving a request for unlocking the vehicle from the cloud, the request containing an identity identifier of the requesting party that is provided by the cloud, wherein in response to an event that a user terminal scans a QR code and a login operation is performed on the user terminal, the cloud sends the request for unlocking the vehicle, the QR code being presented on a display screen of a vehicle control apparatus; and
extracting the identity identifier from the request for unlocking the vehicle and sending, to the cloud, the request for acquiring the user data that contains the identity identifier.

18. A vehicle control system, comprising a memory, a processor and a computer program stored on the memory and operable on the processor, **characterized in that** the program is executed to implement the method of any one of claims 11 to 17.

19. A computer readable storage medium having a computer program stored thereon, **characterized in that** the program implements, when executed by a processor, the method of any one of claims 11 to 17.

20. An application applied to an electronic device, **characterized in that** the application provides an interaction interface for a user, so that through the interaction interface, the user sends, to a cloud, a request for acquiring user data and receive the user data sent by the cloud.
